# EUROPEAN PATENT APPLICATION

(11) **EP 1 575 238 A1**
(43) Date of publication of application: **14.09.2005**
(21) Application number: 05100870.4
(22) Date of filing: 09.02.2005
(51) Int. Cl.: H04L 29/06

(54) **IP mobility in mobile telecommunications system**

(30) Priority: 08.03.2004 US 551207 P
(71) Applicant: Nokia Corporation, 02150 Espoo (FI)
(72) Inventor: Haverinen, Henry, 40250, Jyväskylä (FI); Riittinen, Heikki, 00200, Helsinki (FI); Eronen, Pasi, 00810, Helsinki (FI)
(74) Representative: Smolander, Jouni Juhani

(57) **Abstract**

The present invention relates to arranging data transmission for a mobile node in a telecommunications system comprising a secure network and an insecure network. A connection to a secure network for a mobile node may be arranged by a home agent if the mobile node is accessing the secure network directly or via a third network other than the insecure network, or a connection to the secure network may be arranged by a VPN node if the mobile node is accessing the secure network via the insecure network. According to a first aspect of the invention, the VPN node and the home agent are configured to allocate the same IP address as an internal IP address and as a home address.

## Description

### Field of the invention

The present invention relates to a method and equipment for mobile networking in general, and more particularly, to arranging IP mobility for mobile nodes.

### Background of the invention

Internet Protocols (IP) are the backbone of modern networking and interoperability with these standards is supported in most of the current telecommunications devices. IP is adaptable and has been extended to provide additional functionality.

IP protocols are regularly used to create private networks. A typical secure network connects to outside resources, such as the public Internet. The secure network represents a localized LAN or WAN that operates apart from the publicly accessible Internet. A classic example would be an internal corporate network. The secure network uses a firewall to maintain its security while also allowing access to external resources. The firewall screens traffic passing between the secure network and the Internet to prevent unauthorized access or security breaches.

It is also advantageous to allow authorized users of an intranet to access the secure network when they are not physically connected to it. However, the most efficient way for a user to establish a connection is by using the public Internet infrastructure. This would, for example, allow a user to work from home and access files residing on the secure network. This, of course, creates a security problem because it allows information from the secure network to travel over the public Internet where it is potentially accessible to others. IP security (IPsec) is one technology enabling the creation of Virtual Private Networks (VPNs) to ensure the security of transmitted information packets. A VPN gateway authenticates an external user and creates a tunnel in which the transferred packets are encrypted by keys from credentials provided by an authority entity, such as a key distributor or a public key infrastructure. Tunneling refers to a process where new "to" and "from" information is added to the front of a packet to reroute it to a given location.

Provision of IP services for mobile devices has also become an essential issue. IP mobility provides a protocol for maintaining an IP session with a mobile device whose actual network connection and IP address may change among different physical networks as the mobile device moves. The Mobile IP protocol defined in IETF specifications RFC2002 to RFC2004 and RFC2290 allows mobile nodes to change their access point to the Internet without changing their IP address. The protocol defines a system for routing data of a mobile device to the current location of the device. This is accomplished through the use of a Home Agent that monitors the permanent IP address and current location of the mobile device. The Home Agent allows the mobile device to have a permanent address that is translated by the Home Agent into the mobile device's current address. This is accomplished through tunneling. Of course, the implementation of IP mobility requires additional overhead. This includes extra data attached to the packets and a need to keep a record of the mobile device's current location.

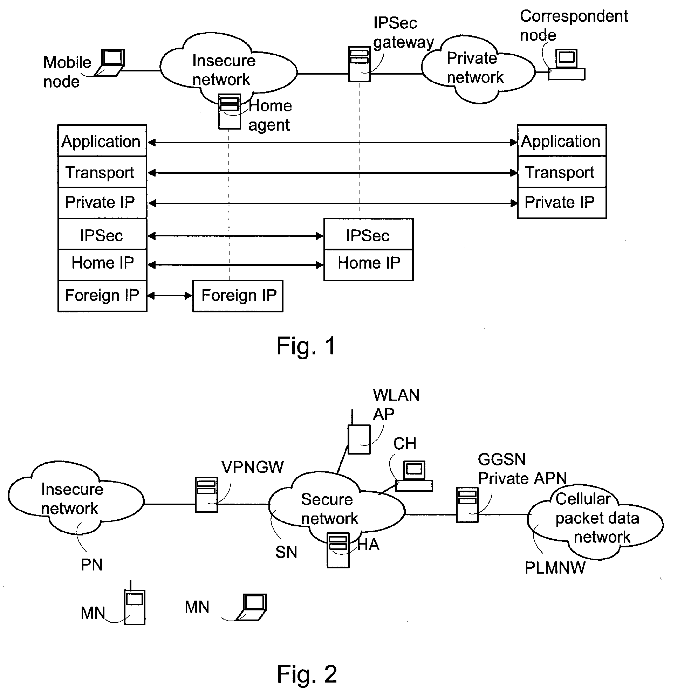

The IPsec VPN's reliance on the external user's IP address, however, makes it unsuitable for direct use in a mobile environment. Mobile devices using IP mobility change their IP address as they move from one access point to another. Potentially, this could happen many times during a relatively short time period. Using a traditional VPN, the terminal would have to re-authenticate and re-establish its secure connection after each of these transitions. Figure 1 illustrates one feasible network topology for providing a VPN connection over an insecure network for a Mobile node. In terms of protocol layers, the Mobile IP functionality is arranged below the IPsec functionality and it hides sub-network changes from the IPsec layer. The Mobile node obtains a care-of address on each foreign network it visits and registers the "Foreign IP" address, i.e. the care-of-address, with the home agent. The Home agent provides the rest of the nodes in the insecure network with the illusion of the Mobile node being reachable with its constant "Home IP" address. The "Home IP" address is the home address in Mobile IP terminology. Using the "Home IP" address, the Mobile node establishes an IPsec session with the IPsec security gateway. In terms of Mobile IP, the IPsec gateway is a correspondent host, so if route optimization is used, the Mobile node and an IPsec gateway may alternatively communicate directly, without routing traffic via a home agent.

Most IPsec implementations support IP address configuration from a private network. In the example of Figure 1, the Mobile node obtains an address from the secure private network and uses this address in communicating with the Correspondent host. This is represented with the "Private IP" layer in the protocol stacks. The IP address of the "Private IP" layer is often called an internal IP address in VPN terminology. The IPsec protocols provide hosts on the private network with the illusion that the Mobile node is directly connected to the private network. To the Correspondent host and other hosts on the private network, the Mobile node looks like any host that is directly connected. A point worth noting in the scenario of Figure 1 is that the order of network elements corresponds to the order of protocol layers in the Mobile node's protocol stack. An intermediate network element only peels off layers from the bottom of the protocol stack or adds new layers to the bottom. Thus, because the Mobile IP is to hide mobility from IPsec, Mobile IP becomes the lowermost layer, and the home agent must be placed in front of the IPsec security gateway, as in Figure 1. The Home agent does not need to be an entity separate from the IPsec gateway but the two logical functionalities can be co-located in the same physical network element.

However, this kind of configuration fails to provide mobility as soon as the mobile node may connect to the private network without using the insecure network. For instance, the secure private network could be accessed over a direct Ethernet access device or a wireless local area network. This problem can be avoided by arranging all traffic to the secure network via the VPN gateway, whereby all connectivity types for which mobility is to be offered provide connectivity to an insecure network. The mobile node never connects directly to the secure network behind the VPN gateway but rather it only connects to the insecure side. In this scenario, a VPN connection is always needed if the mobile node wishes to communicate with a host on the Intranet. A drawback in this arrangement is that VPN tunneling and Mobile IP needs to be used all the time, even when accessing a corporate network from corporate premises. Corporations may be unwilling to change their intranet architecture to always require VPN and Mobile IP protocols.

### Brief description of the invention

An object of the invention is to provide a new kind of arrangement for enabling mobility for secure network connections. The object of the invention is achieved with a method, a system, a network element, a terminal, a network element and a computer program product which are characterized by what is disclosed in the independent claims. Some preferred embodiments of the invention are set forth in the dependent claims.

A connection to a secure network for a mobile node may be arranged by a home agent if the mobile node is accessing the secure network directly or via a third network other than the insecure network, or a connection to the secure network may be arranged by a VPN node if the mobile node is accessing the secure network via the insecure network. According to a first aspect of the invention, the VPN node and the home agent are configured to allocate the same IP address as an internal IP address and as a home address. According to a second aspect of the invention, a terminal at least receiving data from a first node is configured to change at least data reception such that protocol layer functions for communicating with the first node are omitted and the protocol layer functions for communicating with the second node are applied using the same IP address as was used for communicating with a correspondent host with the first node.

Advantages of the invention include that mobility can be provided for secure network (e.g. company intranet) connections, where intranet access may be provided by VPN connections and some other access methods with which Mobile IP can be utilized. As both the security node, e.g. an IPsec gateway, and the home agent are configured to allocate the same IP address as the tunneling end-point address and as the home address for the mobile node, Mobile IP and VPN layers can be used alternatively for the application layer connection even when the mobile node moves to/from the secure network. Thus, no additional Mobile IP layer underneath the VPN layer as illustrated in Figure 1 is necessary and a substantial protocol overhead caused by overlapping Mobile IP and VPN layers can be avoided.

### Brief description of the drawings

In the following, the invention will be described in further detail by means of some embodiments and with reference to the accompanying drawings, in which
Figure 1 is a block diagram showing a system for accessing secure network using IP mobility and VPN;
Figure 2 is a block diagram illustrating a network topology according to an embodiment of the invention;
Figures 3a and 3b illustrate protocol layers according to an embodiment of the invention;
Figure 4 is a flow chart illustrating a method for a mobile node according to an embodiment of the invention;
Figure 5 is a flow chart illustrating a method for a VPN gateway according to an embodiment of the invention; and
Figure 6 is a flow chart illustrating a method for a home agent according to an embodiment of the invention.

### Detailed description of the invention

An embodiment of the invention will be illustrated in the following with reference to the telecommunications system in Figure 2. However, the application of the invention is not limited to any particular network configuration but embodiments of the invention can be applied to any telecommunication systems where a mobile node may access a secure network directly or via an insecure network.

Figure 2 illustrates a network topology according to an embodiment. The secure network SN may be a corporate LAN, for instance. The secure network SN is connected to an insecure, typically publicly accessible, network PN, such as the Internet, via a firewall and a VPN gateway VPNGW. The secure network SN may also be accessible via one or more other networks herein referred to as a 'third network'. For instance, the secure network can be accessed over a Public Switched Telephone network (PSTN) and a dial-up server. Circuit-switched cellular data services are also examples of where a dial-up server may be used. Thus, the secure network SN may be accessed via a PLMN (Public Land Mobile Network) network PMNW, for instance a GSM/GPRS network or a 3GPP (Third Generation Partnership Project) system, also called UMTS (Universal Mobile Telecommunications System). Alternatively to accessing the secure network SN via the Internet and GPRS, a mobile operator may provide a corporation with a private Access Point Name (APN), so it may be possible to access the secure network SN directly over the PLMNW. While in the enterprise premises, a mobile node MN may be directly plugged in an Ethernet wall jack, or it may connect the secure network SN directly over a wireless LAN, for example if the IEEE 802.11 i security extensions are provided.

A mobile node MN is embodied by hardware devices that can move about while being used. Examples of these devices include PDAs, mobile stations, tablet computers, etc. The mobile node MN is configured to implement a client-side VPN protocol layer and Mobile IP protocol layer functions. A home agent HA is arranged in the secure network SN and provides mobility services for the mobile node MN. When the MN is accessing the secure network SN via the insecure network PN, e.g. the Internet, the connection has to be arranged by a secure tunnel provided by a VPN gateway VPNGW and VPN functionality in the mobile node MN. Only the payload of packets may be encrypted over the Internet, or tunneling encrypting the whole packet can be used. Tunneling technologies that may be used include GRE, IPsec, L2F, PPTP, L2TP.

A Correspondent host CH represents an arbitrary network member that the mobile node MN is communicating with. The CH may be an intermediary network member and coupled to any network. For example, the CH may be coupled to the Internet, a corporate network, or a home network. In the present example, the CH is connected to the secure network and there is a need to establish data transfer between the CH and the MN. For instance, the CH may be an email server in the secure network SN.

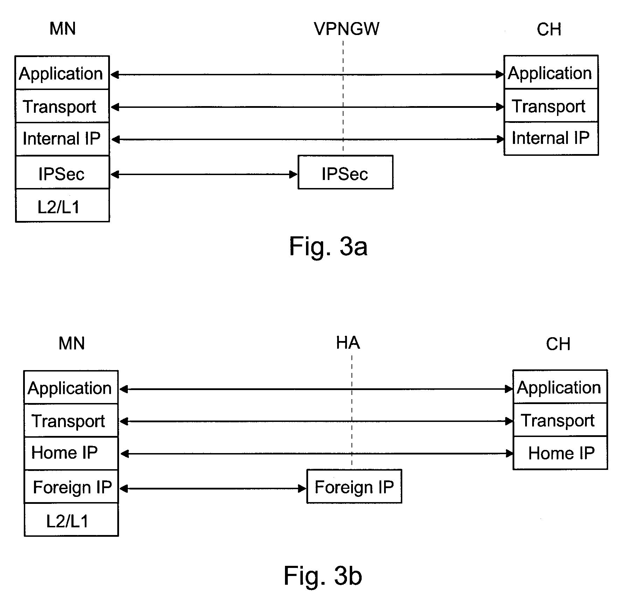

Figures 3a and 3b illustrate protocol layers according to an embodiment. The protocol layers in Figure 3a can be used when a mobile node MN is communicating with the CH from the insecure network PN. Thus, a VPN tunnel is established for the mobile node MN and an internal IP address is used as usual in VPN solutions. More particularly, in situations where the mobile node MN moves under the insecure network PN (or another network from which a connection to the secure network SN can only be arranged via the i n-secure network PN), the MN is configured to change the service for the at least one application layer connection or data flow such that a VPN functionality and an IPsec layer are used. The MN is also configured to determine the same address (in one embodiment the home address) as was used earlier as the mobile node's source address in communication with the CH as a VPN i n-ternal IP address. Thus, there is no need to change the upper layer connections, e.g. an established TCP connection, but the change to the VPN protocol is transparent to the upper layers.

The protocol layers in Figure 3b can be used when the mobile node MN is communicating with the CH by directly accessing the secure network SN or via some third network (e.g. WLAN or PLMNW) considered trusted, and not requiring the use of the VPNGW. When the mobile node MN changes its access point such that a connection to the secure network SN is established via a third network other than the insecure network PN, the mobile node MN is arranged to change into using Mobile IP instead of the VPN functionality and IPsec layer.

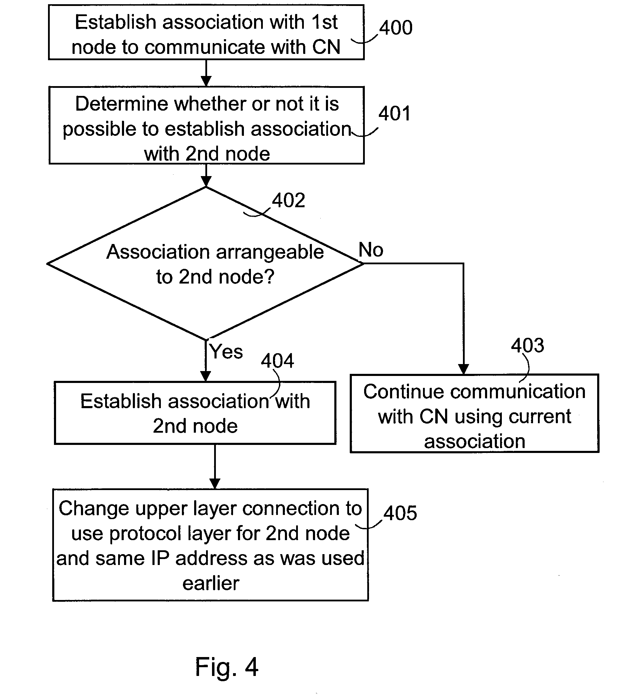

Figure 4 illustrates a method according to an embodiment, which can be implemented in a mobile node MN. In step 400, an association with a 1^{st} network node is established in order to communicate with a correspondent host CH. The 1^{st} node may be a home agent HA or a VPN gateway VPNGW. This step is performed when there is a need to arrange data transmission at least from the CH to the MN via the 1^{st} node. When the association with the 1^{st} node has been established, the mobile node MN can tunnel outgoing packets to the 1^{st} node for further delivery, and the 1^{st} node will intercept incoming packets and tunnel them to the mobile node MN. Intercepting the mobile-destined packets may be based on a link-layer specific technique, such as proxy ARP.

In step 401, the mobile node MN determines whether or not an association with a 2^{nd} node can be established. Depending on which the 1^{st} node is, the 2^{nd} node is either the VPN gateway VPNGW or the home agent HA. The mobile node MN may be configured to enter this step based on at least one of the following reasons: handover is or needs to be performed to another network, the current connection or association with the 1^{st} node is lost, based on user initiation, based on a received message from the 2^{nd} node (e.g. a Mobile IP foreign agent or home agent advertisement message), or based on predetermined time intervals. As to lower layer (L2/L1) changes due to movement of the MN, typical inter-system and/or intra-system handover procedures can be used. As one example, the 3GPP specification TS 23.009 *"Handover Procedures",* v.5.6.0, September 2003, describes inter-access network and intra-access network handover procedures for the 3GPP system. Referring to Figure 2, in one embodiment the mobile node MN is configured to check on which side of the VPNGW it is currently connected and based on this information, the answer to the question in step 402 can be determined.

If, based on the check 401, 402, no association to the 2^{nd} node can be made, the mobile node MN is configured to continue communication (at least reception of packages) with the correspondent host CH using the current association with the 1^{st} node. Otherwise, the mobile node MN is configured to establish 404 the association with the 2^{nd} node. After the association has been established, the mobile node MN is configured to change 405 an upper layer connection to use a protocol layer for communicating with the 2^{nd} node. In practice this means that one or more data flows associated earlier with the protocol layer for communicating with the 1^{st} node are re-associated with the protocol layer with communicating for the 2^{nd} node. Typically, a network application has a socket bound at a TCP/IP stack to a physical network interface or a logical network interface (i.e. a tunnel). Thus, Mobile IP and VPN may exist as separate logical network interfaces and the mobile node MN is configured to change the binding of the socket from the logical network interface of the 1^{st} node to the logical network interface of the 2^{nd} node such that the socket does not change. Consequently, the upper layer application does not detect the change. The mobile node MN is configured to use the same source IP address in communication with the correspondent host CH as was used earlier.

If the 2^{nd} node is the home agent HA, in one embodiment the mobile node MN is configured, in step 401, to transmit a registration request to the home agent HA in the secure network SN. If a registration reply is received, the MN is accessing the secure network SN directly or via some third network, i.e. the MN can determine that the association can be made. In this embodiment, the MN does not have to send any further messages to the HA in step 404 but it may arrange the Mobile IP association internally. It is to be noted that it is not necessary to release the association with the VPNGW, whereby the already existing association can be used to establish the tunnel with the VPNGW quickly if the insecure network PN is re-entered. However, if the HA and the VPNGW are on the same link, the mobile node MN or the home agent HA may need to tell the VPNGW to stop intercepting and tunneling packets that are destined to the mobile node MN, since the home agent HA will intercept and tunnel packets to the mobile node MN. If no response is received, the mobile node MN determines that no association can be made with the home agent, i.e. it is communicating with the CH via the insecure network PN. Thus, the mobile node MN is configured to continue communication via the VPNGW.

If the 2^{nd} node is the VPN gateway VPNGW, in one embodiment the mobile node MN is configured, in step 401, to transmit an IKE (Internet Key Exchange) message to the VPNGW. If a response is received, the MN determines that the association with the VPNGW can be made, i.e. the MN is co n-nected to the insecure network PN, whereby a VPN tunnel is required in order to continue communication with the CH. If no response is received, no association with the VPNGW can be made, and the MN continues, in step 403, to use Mobile IP services of the home agent HA, if possible and applicable. An IETF Internet-Draft *"Mobile IPv4 Traversal Across IPsec-based VPN Gate* ways *draft-ietf mobileip-vpn-problem-solution-03",* S. Vaarala (Ed.), September 29, 2003, discloses some mechanisms for detecting an entry in a secure or insecure network, and these mechanisms may be utilized in steps 401, 402. However, it is important to note that the arrangement in said IETF Internet-Draft is otherwise totally different from the present embodiment, i.e. said arrangement requires a combination of Mobile IP and IPsec layers to be used, thereby increasing packet overhead considerably.

Some further examples of as to how to arrange the above illustrated functionality in the mobile node MN are given in the following. The mobile node MN may send both IKE (Internet Key Exchange) and Mobile IP signaling messages and check which one is ready first. Based on this information, the MN may detect whether the secure or insecure network is available and continue with step 403 or 404. Further, out of band and/or history information on network connections may be utilized. For instance, if a network has previously been insecure, IKE negotiation may be first started. It is also possible that connection settings of a secure network (e.g. a company intranet) have been pre-stored in a mobile node MN, and the configuration indicates that the connection setting in question relates to the secure network. As an example, Symbian Network ID may indicate this information such that "Office" is determined to represent a secure network and "Internet" an insecure network.

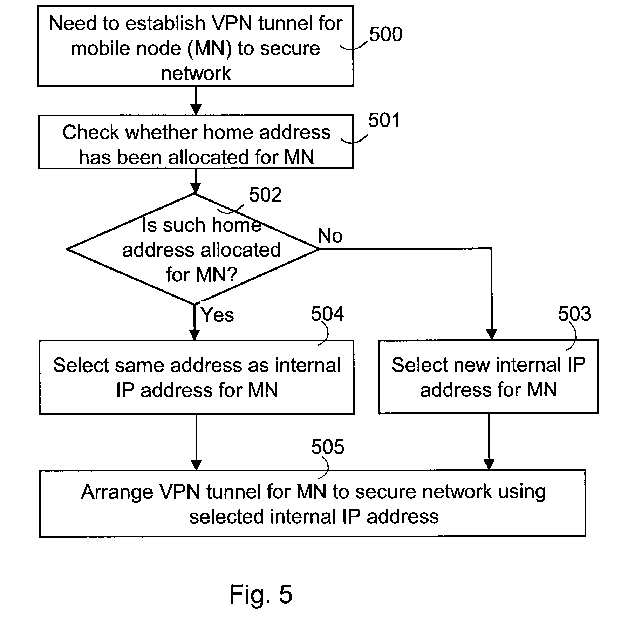

Figure 5 illustrates a method according to an embodiment to be performed in a device configured to function as a VPN gateway VPNGW. In step 500, a need exists to establish a VPN tunnel for a mobile node MN to a secure network in order to communicate with a correspondent host CH. In step 501, the VPNGW is configured to check whether or not a home address has been allocated for the mobile node MN. If, based on a check 501, 502, a home address has been allocated for the MN for communication with the CH, the VPNGW is configured to select 504 the same address as a VPN internal IP address for the mobile node MN. Otherwise, the VPNGW is configured, in step 503, to select a new internal IP address for the mobile node MN. In both cases, the VPNGW is configured to arrange 505 a VPN tunnel for the mobile node MN to the secure network SN using the selected internal IP address. The VPN tunnel may be arranged according to current IPsec specifications, for instance. IETF RFC 2041 specification *"Security Architecture for the Internet Protocof',* November 1998, and the references therein, describe basic information on IPSec. It is also possible that the VPN may be arranged by other protocols, such as Transport Layer Security (TLS) of Secure Socket Layer (SSL) including IP forwarding properties.

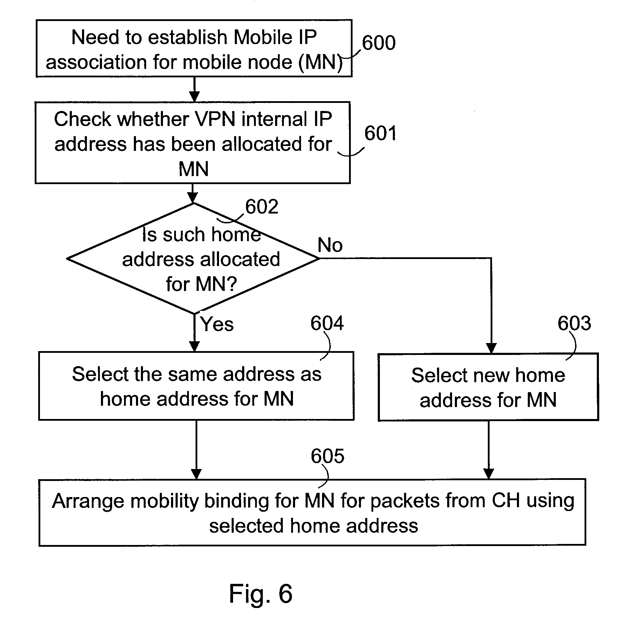

Figure 6 illustrates a method according to an embodiment to be performed in a device configured to function as a home agent HA. In step 600, a need exists to establish Mobile IP binding for a mobile node MN to a secure network in order to at least receive packets from a correspondent host CH. In step 601, the (home agent HA) device is configured to check whether or not a VPN internal IP address has been allocated for the mobile node MN. If, based on a check 601, 602, such an address has been allocated for the MN for communication with the CH, the device is configured to select 604 the same address as the home address for the mobile node MN. Otherwise, the device is configured, in step 603, to select a new home address for the mobile node MN. In step 605, the device is configured to arrange mobility binding for the mobile node MN using the selected internal IP address.

Thus, also referring to step 304 in Figure 4, the mobile node MN obtains a care-of-address from a foreign agent in the third network (in some configurations also the secure network SN may include a foreign agent) and registers it to the home agent using Mobile IP procedures, i.e. by Registration Request and Registration Reply messages. The home agent HA enables the mobile node MN to continue communications with the constant home address, which is the same as the VPN's internal IP address. For more details on Mobile IP procedures, reference is made to the IETF specification RFC 2002, October 1996.

If the mobile node MN moves such that it accesses the secure network SN directly, the mobile node MN is at home as regards Mobile IP and thus receives an agent advertisement from the home agent. In this case, the mobile node MN may communicate directly without any mobility related headers using the same IP address as used as the VPN internal IP address.

Referring to Figures 5 and 6, many embodiments exists as to how to arrange the selection of the same address for the mobile node MN both in the home agent HA and in the VPN gateway VPNGW, e.g. in the IPsec VPN gateway. In one embodiment, the VPN gateway VPNGW and the home agent HA are co-located in the same network element. The home agent HA and VPN gateway VPNGW implementations are aware of each other, so they are able to arrange the same IP address as the home address and as the VPN internal IP address. In this embodiment and in an alternative embodiment in which the home agent HA and the VPN gateway VPNGW are in separate network elements, the entity to which the association will be made may request for the address allocated for the mobile node MN from the other entity when there is a need exists to establish the association for the mobile node MN, the mobile node MN may be identified by its MAC address or a username, such as a Network Access Identifier, for instance. The other entity receives the request, checks the IP address allocated for the mobile node MN, and sends a response comprising the address. The requesting entity then selects the same address. The requesting entity may be either the home agent HA or the VPN gateway VPNGW but it is not necessary that both entities support the functionalities of both the requesting and responding entity. In an alternative embodiment, information on the addresses allocated for the mobile nodes MN is maintained in one or more storage positions from which the VPNGW and/or HA is configured to perform the check. In one embodiment, the MN is configured to send the earlier address (used with the 1^{st} node) to the 2^{nd} node when establishing the association in step 404 of Figure 4. Thus the 2^{nd} node is configured to use the same address. For instance, the MN sends in a Mobile IP registration request message the same address as was used as the VPN i n-ternal IP address. In one possible configuration the VPNGW is always available and the MN can always obtain the IP address first from the VPNGW. If a fixed IP address has been used for the mobile node MN in the 1^{st} node, it is also possible to inform the 2^{nd} node of this address and use it in the 2^{nd} node.

In an alternative embodiment differing from those of Figures 5 and 6, the VPN gateway VPNGW and the home agent HA are configured to obtain the internal IP address/home address from the same DHCP server. In this embodiment, no checking steps 501; 502 and 601; 602 are needed. The VPN gateway VPNGW and the home agent HA may be configured to use the same MAC address of the mobile node MN in their DHCP requests, the DHCP server allocates the same IP address. The MAC address may be, but does not necessarily have to be, an actual MAC address of the mobile node MN. In one embodiment, more than one network element may be involved in the selection of the home address and/or the VPN internal IP address. For instance, a RADIUS server (Remote Authentication Dial-In User Service) in the secure network SN can be used to determine the same address as the internal IP address and as the home address for the mobile node MN. The VPN gateway VPNGW and/or the home agent HA may thus be configured to indirectly allocate the same address based on some other network element.

Use of the above described embodiments does not preclude use of an outer Mobile IP layer (i.e. IP mobility in the insecure network PN), or another VPN mobility solution, to provide mobility between access networks that are connected to the insecure side of the VPN gateway VPNGW. The above-described embodiments may still be used to provide VPN mobility. Even if two mobility layers (an outer layer for VPN mobility and an inner layer for intranet mobility) were used, an advantage obtained by the above-illustrated embodiment in the mobile node MN is that only one of the layers is active at a time, so double overhead is avoided.

In an embodiment not shown in Figure 2, a device functioning as the VPN gateway VPNGW is also provided with a mobile IP foreign agent (FA) functionality or the VPNGW is connected to a mobile IP foreign agent. In a manner similar to that illustrated in the above embodiments, as the mobile node MN enters the secure network SN directly or via a third network, it registers with the internal home agent HA. Only mobile IP tunneling may then be used, and no VPN is used at all.

When the mobile node MN connects the secure network SN via the insecure network PN, it establishes a VPN tunnel to the VPN gateway VPNGW. After establishing the VPN tunnel, the mobile node MN registers with the foreign agent, co-located in the VPN gateway VPNGW. The mobile IP address registration is transported over the VPN tunnel. Foreign agent advertisements may also be delivered over the VPN tunnel prior to registration. As is usual in mobile IP, the foreign agent forwards the registration request to the internal home agent HA. From the viewpoint of the home agent HA, the registration looks similar to any other registration with an internal foreign agent. No non-standard functionality is required in the home agent HA. The VPN internal IP address is not used by the mobile node MN in this case, so it is not necessary to allocate one; however, it does not matter if such an address was allocated. In the packets that are tunnelled over the VPN tunnel, the home IP address is used as the IP address of the mobile node MN, such as usually in Mobile IP between the mobile node MN and the foreign agent FA. The foreign IP address (care-of-address, COA) is an address of the VPNGW. Applications in the mobile node MN are arranged to use the mobile IP home address. The network element(s) implementing the VPN gateway and foreign agent functionalities has to be capable of using the Mobile IP home address in the VPN tunnel as the IP address of the mobile node MN. This embodiment also avoids double tunneling from the mobile node MN, which is especially advantageous for wireless terminals operating over an air interface.

When the mobile node MN is registering via the VPN gateway VPNGW, a foreign agent-home agent tunnel can be arranged between the VPN gateway VPNGW and the home agent HA. As an example, a datagram destined to the mobile node's MN home address can be considered in a situation where the mobile node MN has registered to the home agent HA via the VPN gateway VPNGW: When the datagram reaches the secure network SN, the home agent HA intercepts it and tunnels it to the foreign agent, according to standard mobile IP procedures. The foreign agent co-located in the VPN gateway VPNGW decapsulates the datagram and the datagram is encapsulated again in the VPN tunnel to be delevered to the mobile node MN. In an alternative embodiment, the foreign agent transmits the decapsulated datagram to the VPNGW which intercepts it and encapsulates the datagram. The encapsulated datagram is then sent to the MN by the VPN tunnel. Thus, the mobile IP home address is used as the IP address of the mobile node MN in the packets that are tunneled over the VPN tunnel, in other words the same IP address is used as the internal VPN address and as the home address. The mobile node MN decapsulates the IPsec-tunneled datagram and delivers it to the application layer.

In a reverse direction, the mobile node MN is arranged to add IPSec headers to the packet being transmitted and transmit it to the VPNGW address. The VPNGW strips off the IPSec headers and the packet may be transmitted to the correspondent node CN in the secure network SN. The present invention can be implemented in the existing network elements and terminals. They all have processors and memory with which the inventive functionality described above may be implemented. The functions described above may be located in one network element or some of them may be in one element and the others in other elements regardless of how they are located in the examples that were used to illustrate the invention. Computer program codes executed in the central processing unit comprising one or more processors may be used for causing a terminal to function as the mobile node MN to implement the VPN protocol and Mobile IP protocol functions and the functionality related to arranging data transmission with the CH in the secure network SN, some embodiments of which were illustrated above in association with Figures 3a, 3b and 4. Computer program codes executed in the central processing unit of a device configured to function as a home agent HA and/or in a device configured to function as a VPN gateway VPNGW can be used to cause the device to implement the functionality illustrated above in association with Figure 5 and/or 6. Computer programs can be received via a network and/or stored in memory means, for instance on a disk, a CD-ROM disk or other external memory means, from where they can be loaded into the memory of the processing device. Hardware solutions or a combination of hardware and software solutions may also be used to implement the inventive functions.

The accompanying drawings and the related description are only intended to illustrate the present invention. Different variations of and modifications to the invention will be apparent to those skilled in the art without departing from the scope of the invention defined in the appended claims.

## Claims

1. A method for arranging data transmission for a mobile node in a telecommunications system comprising a secure network and an insecure network, wherein access between the insecure network and the secure network is arranged via a VPN node and wherein a home agent is established for the mobile node in the secure network, the method comprising:
arranging at least data transmission from a correspondent host to the mobile node in the secure network by the home agent in response to the mobile node accessing the secure network directly or via a third network other than the insecure network, or arranging data transmission between the mobile node and a correspondent host in the secure network by the VPN node in response to the mobile node accessing the secure network via the insecure network, wherein
the VPN node and the home agent are configured to arrange use of the same IP address as an internal address and as a home address for the mobile node for communication with the correspondent host.

2. A method according to claim 1, the method comprising:
checking whether an IP address has already been allocated for the mobile node by the home agent or the VPN node, and
arranging the same IP address for the connection via the VPN node or the home agent in response to an IP address already being allocated.

3. A method according to claim 1, wherein the VPN node and the home agent are co-located in the same device.

4. A method according to claim 1, the method comprising:
sending, from the VPN node and the home agent, a request for an IP address to a same DHCP server, and
selecting the address received from the DHCP server as the internal address and the home address.

5. A method according to claim 1, the method comprising:
determining in the mobile node whether it is accessing the secure network directly or via a third network, and
arranging the data transmission at least from the correspondent host to the mobile node via the home agent if the mobile node is accessing the secure network directly or via a third network.

6. A method according to claim 5, wherein said determining step comprises:
transmitting a registration request to the home agent in the secure network, and
determining that the mobile node is accessing the secure network directly or via a third network if a registration reply is received from the home agent.

7. A method according to claim 5 or 6, wherein an application layer connection has been arranged for the mobile node via the VPN node before said determining step is performed, and
at least data reception is changed in the mobile node to be carried by a Mobile IP layer without a VPN protocol layer, whereby the same IP address as was used as the VPN internal address is used as the home address.

8. A telecommunications system comprising a secure network, an insecure network, a VPN node for arranging access between the insecure network and the secure network, and a home agent for mobile nodes in the secure network, wherein the system is configured to arrange at least data transmission from a correspondent host to the mobile node in the secure network by a home agent in response to the mobile node accessing the secure network directly or via a third network other than the insecure network,
the system is configured to arrange data transmission between the mobile node and a correspondent host in the secure network by the VPN node in response to the mobile node accessing the secure network via the insecure network, and
the VPN node and the home agent are configured to arrange use of the same IP address as an internal address and as a home address for the mobile node for communication with the correspondent host.

9. A system according to claim 8, wherein the VPN node and the home agent are configured to send a request for an IP address to a same DHCP server.

10. A network element in a telecommunications system, the network element being configured to function as a home agent, wherein, as a response to a need to establish data transmission between a mobile node and a correspondent host by the network element, the network element is configured to arrange as a home address of the mobile node the same IP address as has been arranged by a VPN node as an internal address for communication between the mobile node and the correspondent host.

11. A network element according to claim 10, wherein the network element is configured to check whether an IP address has already been allocated for the mobile node by the VPN node, and
the network element is configured to arrange the same IP address as the home address in response to an IP address already being allocated by the VPN node.

12. A network element according to claim 10 or 11, wherein the network element is co-located with the VPN node.

13. A network element in a telecommunications system, the network element being configured to function as a VPN node, wherein, as a response to a need to establish data transmission between a mobile node and a correspondent host by the network element, the network element is configured to arrange as an internal address of the mobile node for communication with the correspondent host the same IP address as what has been arranged by a home agent as a home address of the mobile node.

14. A network element according to claim 13, wherein the network element is configured to check whether an IP address has already been allocated for the mobile node by the home agent, and
the network element is configured to arrange the same IP address as the internal address in response to an IP address already being allocated by the home agent as the home address for the mobile node.

15. A network element according to claim 13 or 14, wherein the network element is co-located with the home agent.

16. A mobile terminal configured to implement VPN protocol layer and Mobile IP protocol layer functions, wherein
the terminal is configured to establish an association with a first node for at least receiving data from a correspondent host in a secure network,
the terminal is configured to determine whether or not it is possible to establish an association with a second node for at least receiving data from a correspondent host in a secure network, wherein one of the first and the second node is a VPN node and the other is a home agent, and
in response to such an association with the second node being arrangeable, the terminal is configured to adapt an upper layer connection to use the protocol layer functions for communicating with the second node instead of the protocol layer functions for communicating with the first node, and to use the same IP address as was used for communicating with the correspondent host with the first node.

17. A terminal according to claim 16, wherein the terminal is configured to determine whether it is accessing the secure network directly or via a third network, and
the terminal is configured to arrange data transmission at least from the correspondent host via the home agent if the mobile node is accessing the secure network directly or via a third network.

18. A terminal according to claim 17, wherein the terminal is configured to transmit a registration request to the home agent in the secure network, and
the terminal is configured to determine that the terminal is accessing the secure network directly or via a third network if a registration reply is received from the home agent.

19. A terminal according to claim 16, wherein the first node is a VPN node providing a secure tunnel for the terminal over an insecure network to the secure network and the second node is a home agent, whereby the terminal is configured to change at least data reception to be carried by a Mobile IP layer without a VPN protocol layer, whereby the same IP address as was used as a VPN internal address is arranged to be used as a home address.

20. A terminal according to claim 16, wherein the first node is a home agent and the second node is a VPN node providing a secure tunnel for the terminal over an insecure network to the secure network, whereby the terminal is configured to change at least data reception to be carried by the VPN protocol layer without the Mobile IP layer, whereby the same IP address as was used as the home address is arranged to be used as the VPN internal address.

21. A computer program product for controlling a mobile terminal, wherein the terminal is configured to establish an association with a first node for at least receiving data from a correspondent host in a secure network, the computer program product comprising:
a program code portion causing the mobile terminal to determine whether or not it is possible to establish an association with a second node for at least receiving data from a correspondent host in a secure network, wherein one of the first and the second node is a VPN node and the other is a home agent, and
a program code portion causing the mobile terminal, in response to such an association being arrangeable with the second node, to adapt an u p-per layer connection to use protocol layer functions for communicating with the second node instead of protocol layer functions for communicating with the first node, and to use same IP address as was used for communicating with the correspondent host with the first node.
